# EUROPÄISCHE PATENTANMELDUNG

(11) **EP 1 815 774 A1**
(43) Veröffentlichungstag der Anmeldung: **08.08.2007**
(21) Anmeldenummer: 06101202.7
(22) Anmeldetag: 02.02.2006
(51) Int. Cl.: A47J 31/44

(54) **Vorrichtung zur Ausgabe von Milch und Milchschaum**

(71) Anmelder: M. Schaerer AG, 3302 Moosseedorf (CH)
(72) Erfinder: Wüthrich, Christoph, 3053, Wiggiswil (CH); Hostettler, Hans-Ulrich, 3114, Wichtrach (CH)
(74) Vertreter: Scheuzger, Beat Otto

(57) **Zusammenfassung**

Eine Vorrichtung zur Ausgabe von Milch und Milchschaum umfasst eine Mischkammer (1), in welche über eine Milchzuführleitung (4) von einem Milchbehälter (9) Milch zuführbar ist. In der Milchzuführleitung (4) ist eine Pumpe (10) angebracht, in die Mischkammer (1) münden auch eine Dampfzuführung und eine Luftzuführung. In dieser Vorrichtung ist ein Temperaturfühler (11), (15) angebracht, mit welchem die Temperatur der Milch im Milchbehälter (9) oder die Austritttemperatur der Milch bzw. des Milch-Dampfgemisches messbar ist. Die gemessenen Temperaturwerte sind an eine Steuereinrichtung (13) lieferbar, in welcher aufgrund dieser gemessenen Temperaturen die Fördermenge der Pumpe (10) für die Milch und/oder die zugeführte Dampfmenge einstellbar ist. Dadurch erhält man Milch und Milchschaum mit einer konstanten Temperatur, unabhängig von der Temperatur der Milch, die sich im Milchbehälter (9) befindet.

## Beschreibung

Die vorliegende Erfindung bezieht sich auf eine Vorrichtung zur Ausgabe von Milch und Milchschaum, umfassend eine Mischkammer, in welche über eine Milchzuführleitung von einem Milchbehälter Milch zuführbar ist, wobei in der Milchzuführleitung eine Pumpe angebracht ist, und in welche eine Dampfzuführung und eine Luftzuführung münden.

Derartige Vorrichtungen sind bekannt und werden beispielsweise auch in Kaffeemaschinen integriert. Diese Vorrichtungen dienen dazu, dass neben der Ausgabe von Kaffee auch kalte und warme Milch und Milchschaum insbesondere für die Herstellung von Cappuccino und Macchiato ausgegeben werden kann. Hierbei hat man festgestellt, dass die Qualität des Milchschaums am optimalsten ist bei einer Temperatur von 70° C. Zudem ist es wünschenswert, dass die ausgegebene warme Milch eine Temperatur von 75° C aufweist.

In bekannter Weise wird die Milch in der Mischkammer durch Beimischung von heissem Wasserdampf erwärmt und ausgegeben. Der auszugebende Milchschaum wird ebenfalls in der Mischkammer erzeugt, wobei neben der Beimischung von heissem Wasserdampf auch noch Luft beigemischt wird.

Damit nun aus dieser Vorrichtung die Milch und der Milchschaum mit der gewünschten Temperatur von 75° C bzw. 70° C bezogen werden könnten, müssten die Parameter der drei zusammengemischten Elemente Milch, Wasserdampf und gegebenenfalls Luft konstant gehalten werden oder entsprechend aufeinander abgestimmt sein. Dies wäre beim Wasserdampf und der Luft durchaus möglich, die Milch im Milchbehälter müsste aber klimatisiert werden, damit man eine konstante Temperatur hätte. Eine derartige Klimatisierung, insbesondere Kühlung, der Milch ist aber mit dem entsprechenden Aufwand verbunden. Zudem müsste die Milch, die neu in den Behälter eingefüllt wird, ebenfalls bereits die vorgegebene Temperatur aufweisen, um Wartezeiten zu vermeiden, bis die Milch im Behälter auf die gewünschte Temperatur gekühlt oder erwärmt worden ist.

Die Aufgabe der vorliegenden Erfindung besteht nun darin, eine Vorrichtung zur Ausgabe von Milch und Milchschaum derart zu gestalten, dass sowohl bei der ausgegebenen Milch als auch beim ausgegebenen Milchschaum eine gewünschte optimale Ausgabetemperatur erreicht werden kann.

Erfindungsgemäss erfolgt die Lösung dieser Aufgabe dadurch, dass ein Temperaturfühler angebracht ist, mit welchem die Temperatur der Milch im Milchbehälter und/oder die Austritttemperatur der Milch bzw. des Milch-Dampfgemisches messbar ist, dass die gemessene Temperatur bzw. Austritttemperatur an eine Steuereinrichtung leitbar ist und durch die Steuereinrichtung aufgrund dieser gemessenen Temperatur bzw. Austritttemperatur die Fördermenge der Pumpe für die Milch und/oder die zugeführte Dampfmenge einstellbar ist.

Mit dieser Ausgestaltung der Erfindung kann der Temperaturfühler im Milchbehälter angeordnet sein und die Temperatur der Milch messen, aufgrund derer gemäss einer vorgegebenen Datenreihe die Fördermenge der Pumpe eingestellt wird, was bedeutet, dass je wärmer die Milch im Behälter ist, mehr Milch in die Mischkammer zugeführt wird und durch die zugeführte Dampfmenge auf die gewünschte Temperatur gebracht wird.

Anstelle der Veränderung der Fördermenge der Pumpe für die Milch kann diese beibehalten werden, geändert kann beispielsweise die zugeführte Dampfmenge werden, die auch gemäss einer vorgegebenen Datenreihe zuführbar ist, wodurch auch so die ausgegebene Milch die gewünschte Temperatur hat, unabhängig davon, mit welcher Temperatur die Milch in die Mischkammer zugeführt wird.

Es wäre auch denkbar, sowohl die Fördermenge der Pumpe für die Milch als auch die zugeführte Dampfmenge gemäss einer vorgegebenen Datenreihe zu verändern.

Der Temperaturfühler kann auch so in der Vorrichtung angebracht werden, dass die Austritttemperatur des Milch-Dampfgemisches messbar ist. Je nach gemessener Austritttemperatur kann hier auch gemäss einer vorgegebenen Datenreihe die Fördermenge der Pumpe für die Milch eingestellt werden, wodurch die Austritttemperatur des Milchdampfgemisches die vorgegebene Solltemperatur erreicht.

In gleicher Weise wie vorgängig beschrieben worden ist könnte aber auch anstelle der Fördermenge der Pumpe für die Milch die zugeführte Dampfmenge entsprechend eingestellt werden. Auch hier ist denkbar, dass sowohl die Fördermenge der Pumpe für die Milch als auch die zugeführte Dampfmenge eingestellt werden, abhängig von der gemessenen Austritttemperatur.

In vorteilhafter Weise ist der Temperaturfühler im Milchbehälter für die Milch angebracht, so dass durch die Steuereinrichtung aufgrund der gemessenen Temperatur die Fördermenge der Pumpe für die Milch einstellbar ist. Dies ist eine einfache und kostengünstige Lösung.

In vorteilhafter Weise ist in der Steuereinrichtung in einem Speicher eine Temperaturtabelle abgespeichert, in welcher jedem Wert der Temperatur ein Stellwert für die durch die Pumpe zu liefernde Fördermenge zugeordnet ist. Dadurch ergibt sich ein einfacher Aufbau für die Steuerung. Hierbei ist die Pumpe gemäss dem zugeordneten Stellwert durch die Steuereinrichtung einstellbar.

Eine weitere vorteilhafte Ausgestaltung der Erfindung besteht darin, dass durch die Steuereinrichtung aufgrund der gemessenen Temperatur zusätzlich die zuführbare Dampfmenge über ein in der Dampfzuführung angebrachtes erstes Ventil einstellbar ist. Hierdurch müssen die entsprechenden zugeführten Medien nur geringfügig verändert werden.

Eine andere Ausgestaltung der Erfindung besteht darin, dass der Temperaturfühler derart angebracht ist, dass dadurch die Austritttemperatur der Milch bzw. des Milchdampfgemisches messbar ist und dass durch die Steuereinrichtung aufgrund der gemessenen Austritttemperatur die Fördermenge der Pumpe für die Milch einstellbar ist. Durch diese Lösung wird direkt die Austritttemperatur des Milch-Dampfgemisches gemessen, wodurch eine genaue Steuerung erreicht werden kann.

Auch hier ist in der Steuereinrichtung in einem Speicher eine Austritttemperaturtabelle abgespeichert, in welcher jedem Wert der Austritttemperatur ein Stellwert für die durch die Pumpe zu liefernde Fördermenge zugeordnet ist, was auch hier einen einfachen Aufbau der Steuerung zur Folge hat.

Auch in dieser Ausführungsform ist durch die Steuereinrichtung aufgrund der gemessenen Austritttemperatur zusätzlich die zuführbare Dampfmenge über ein in der Dampfzuführung angebrachtes erstes Ventil einstellbar, wodurch, wie vorgängig erwähnt, die Steuerung genauer wird.

Es kann auch sowohl im Milchbehälter als auch zum Messen der Austrittstemperatur des Milch-Dampfgemisches jeweils ein Temperaturfühler angebracht sein, wobei die gemessenen Werte der jeweiligen Temperatur an die Steuereinrichtung weitergegeben werden, wodurch die Fördermenge der Pumpe für die Milch und/oder die Zuführmenge des Dampfes noch schneller geregelt werden können.

Ausführungsbeispiele der vorliegenden Erfindung werden nachfolgend anhand der beiliegenden Zeichnung beispielhaft näher erläutert.

Es zeigt:
Fig. 1 in schematischer Darstellung eine Vorrichtung zur Ausgabe von Milch und Milchschaum, bei welcher die Temperatur der Milch im Behälter gemessen wird, und aufgrund der gemessenen Werte die Fördermenge der Pumpe für die Milch eingestellt wird;
Fig. 2 in schematischer Darstellung das Ausführungsbeispiel gemäss Fig. 1, wobei aber zusätzlich noch in Abhängigkeit der gemessenen Temperatur der Milch im Milchbehälter die Dampfzuführmenge verändert werden kann; und
Fig. 3 in schematischer Darstellung eine Vorrichtung zur Ausgabe von Milch und Milchschaum, bei welcher die Austritttemperatur der Milch bzw. des Milchschaumes gemessen wird und bei welchem die Fördermenge der Pumpe für die Milch und/oder die zugeführte Dampfmenge eingestellt werden kann, abhängig von der gemessenen Temperatur.

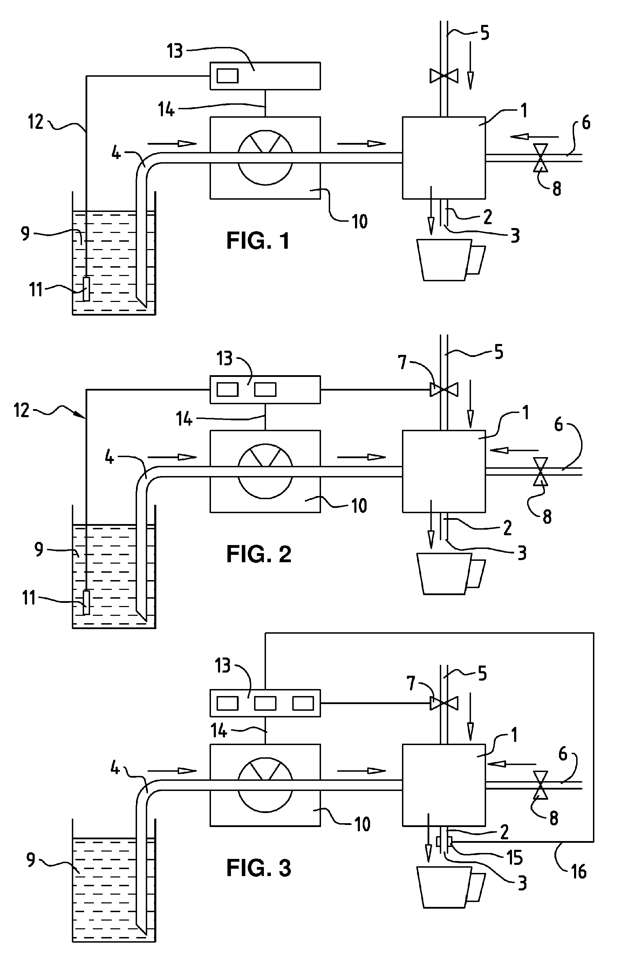

Wie aus Fig. 1 ersichtlich ist, umfasst die hier dargestellte Vorrichtung zur Ausgabe von Milch und Milchschaum eine Mischkammer 1, welche eine Austrittleitung 2 mit einer Austrittöffnung 3 aufweist. In die Mischkammer 1 münden in bekannter Weise eine Milchzuführleitung 4, eine Dampfzuführleitung 5 und eine Luftzuführleitung 6. In die Dampfzuführleitung 5 ist in bekannter Weise ein erstes Ventil 7 eingesetzt, mit welchem die Dampfzuführung zur Mischkammer 1 zuschaltbar ist. In gleicher Weise ist in die Luftzuführleitung 6 ein zweites Ventil 8 eingesetzt, mit welchem in bekannter Weise die Luftzufuhr in die Mischkammer 1 zuschaltbar ist.

Die Milchzuführleitung 4 endet in einem Milchbehälter 9, in welchem die Milch untergebracht ist. Zwischen dem Milchbehälter 9 und der Mischkammer 1 ist eine Pumpe 10 angeordnet, mit welcher die Milch vom Milchbehälter 9 in der gewünschten Menge an die Mischkammer 1 zugeleitet wird.

Im Milchbehälter 9 ist ferner ein Temperaturfühler 11 untergebracht, welcher über eine Leitung 12 mit einer Steuereinrichtung 13 verbunden ist. Mit diesem Temperaturfühler 11 wird die aktuelle Temperatur der Milch im Milchbehälter 9 dauernd gemessen, der jeweilige Wert der Temperatur wird an die Steuereinrichtung 13 weitergegeben. Die Steuereinrichtung 13 ist mit einer Leitung 14 mit der Pumpe 10 verbunden.

Wenn nun Milch oder Milchschaum aus dieser Vorrichtung bezogen wird, wird die Temperatur der Milch im Milchbehälter 9 über den Temperaturfühler 11 gemessen und an die Steuereinrichtung 13 weitergegeben. In der Steuereinrichtung 13 ist eine Temperaturtabelle abgespeichert, jedem Temperaturwert ist eine Stellgrösse zugeordnet, welcher die Förderleistung der Pumpe 10 festlegt. Gemäss dieser Stellgrösse wird über die Leitung 14 von der Steuereinrichtung die Pumpe 10 entsprechend eingestellt, so dass die vorgegebene Fördermenge der Milch an die Mischkammer 1 abgegeben wird. Die Dampfzuführung in die Mischkammer 1 ist konstant, die Luftzuführung wird zu- oder abgeschaltet, abhängig davon, ob Milch oder Milchschaum bezogen wird.

Durch diesen Vorgang kann erreicht werden, dass die aus der Vorrichtung bezogene Milch bzw. Milchschaum jeweils konstant die gewünschte Temperatur aufweisen, nämlich 75° C für die Milch und 70° C für den Milchschaum, unabhängig davon, welche Temperatur die zugeführte Milch aufweist. Es wird die Menge von Milch in die Mischkammer 1 zugeführt, die der zugeführte Wasserdampf auf die gewünschte Temperatur erwärmen kann. Insbesondere der Milchschaum hat bei dieser Temperatur die optimalste Qualität.

Eine weitere Ausführungsform der Erfindung ist in Fig. 2 dargestellt. Der Grundaufbau der Vorrichtung entspricht der Ausführungsform gemäss Fig. 1, für gleiche Teile sind entsprechend die gleichen Bezugszeichen verwendet worden. Zusätzlich zu der Ausführungsform gemäss Fig. 1 ist in der Ausführungsform gemäss Fig. 2 eine Verbindungsleitung 15 zwischen der Steuereinrichtung 13 und dem ersten Ventil 7 angeordnet, mit welchem die Dampfzuführung in die Mischkammer 1 eingestellt werden kann. Mit dieser Vorrichtung kann neben der Steuerung der Milchzuführung auch die Dampfzuführung durch die Steuereinrichtung gesteuert werden. Hierzu ist in der Steuereinrichtung wiederum eine Temperaturtabelle abgespeichert, wobei jedem Temperaturwert ein Stellwert für die Pumpe 10 und ein Stellwert für das erste Ventil 7 zugeordnet sind, welche aufgrund der Erfahrungswerte ermittelt wurden. Auch dadurch ist es möglich, die aus der Vorrichtung bezogene Milch bzw. Milchschaum konstant auf den gewünschten Temperaturen zu halten, wodurch eine optimale Qualität erreichbar ist.

Selbstverständlich ist es auch denkbar, dass nur die zugeführte Dampfmenge in Abhängigkeit der Temperatur der Milch im Milchbehälter 9 gesteuert wird, wobei die Fördermenge der Milch konstant gehalten wird.

Ein weiteres Ausführungsbeispiel ist in Fig. 3 dargestellt. Auch dieses Ausführungsbeispiel weist den selben Grundaufbau auf, wie das Ausführungsbeispiel gemäss Fig. 1, für die gleichen Elemente sind wiederum die gleichen Bezugszeichen verwendet worden. Bei diesem Ausführungsbeispiel ist der Temperaturfühler 15 in der Austrittsleitung 2 angeordnet und über die Leitung 16 mit der Steuereinrichtung verbunden. Durch die Anordnung des Temperaturfühlers 15 in der Austrittsleitung 2 wird die Temperatur der ausgegebenen Milch bzw. des ausgegebenen Milchschaums direkt gemessen und an die Steuereinrichtung geleitet. Die Steuereinrichtung bewirkt eine Änderung der Fördermenge der Milch durch die Pumpe 10, wobei die Dampfzuführung konstant gehalten wird, die Steuereinrichtung kann zusätzlich aber auch die Dampfzuführung in die Mischkammer 1 verändern, ebenfalls abhängig von der vom Temperaturfühler 15 gemessenen Temperatur.

Auch hier ist es selbstverständlich denkbar, dass die Fördermenge der in die Mischkammer 1 zugeführten Milch konstant gehalten wird, und dass über die Steuereinrichtung 13 lediglich die Dampfzuführmenge über Verstellung des ersten Ventiles 7 steuerbar ist, ebenfalls in Abhängigkeit der vom Temperaturfühler 15 gemessenen Temperatur.

Selbstverständlich ist es denkbar, dass sowohl die Fördermenge der Milch durch die Pumpe 10 als auch die Zuführmenge des Dampfes in die Mischkammer 1 über die Steuereinrichtung 13 einstellbar sind, abhängig von der durch den Temperaturfühler 15 gemessenen Temperatur.

Durch diese Ausgestaltungen der vorliegenden Erfindung wird erreicht, dass bei einer Vorrichtung zur Ausgabe von Milch und Milchschaum die ausgegebene Milch und der ausgegebene Milchschaum eine gewünschte Temperatur aufweisen, bei welcher insbesondere beim Milchschaum die optimalste Qualität erreichbar ist.

## Patentansprüche

1. Vorrichtung zur Ausgabe von Milch und Milchschaum, umfassend eine Mischkammer (1), in welche über eine Milchzuführleitung (4) von einem Milchbehälter (9) Milch zuführbar ist, wobei in der Milchzuführleitung (4) eine Pumpe (10) angebracht ist, und in welche eine Dampfzuführung und eine Luftzuführung münden, **dadurch gekennzeichnet, dass** ein Temperaturfühler (11, 15) angebracht ist, mit welchem die Temperatur der Milch im Milchbehälter (9) und/oder die Austritttemperatur der Milch bzw. des Milch-Dampfgemisches messbar ist, dass die gemessene Temperatur bzw. Austritttemperatur an eine Steuereinrichtung (13) lieferbar ist und durch die Steuereinrichtung (13) aufgrund dieser gemessenen Temperatur bzw. Austritttemperatur die Fördermenge der Pumpe (10) für die Milch und/oder die zugeführte Dampfmenge einstellbar ist.

2. Vorrichtung nach Anspruch 1, **dadurch gekennzeichnet, dass** der Temperaturfühler (11) derart angebracht ist, dass **dadurch** die Temperatur der Milch im Milchbehälter (9) messbar ist und dass durch die Steuereinrichtung (13) aufgrund der gemessenen Temperatur die Fördermenge der Pumpe (10) für die Milch einstellbar ist.

3. Vorrichtung nach Anspruch 2, **dadurch gekennzeichnet, dass** in der Steuereinrichtung (13) in einem Speicher eine Temperatur-Tabelle abgespeichert ist, in welcher jedem Wert der Temperatur ein Stellwert für die durch die Pumpe (10) zu liefernde Fördermenge zugeordnet ist.

4. Vorrichtung nach Anspruch 3, **dadurch gekennzeichnet, dass** durch die Steuereinrichtung (13) die Pumpe (10) gemäss dem zugeordneten Stellwert einstellbar ist.

5. Vorrichtung nach einem der Ansprüche 2 bis 4, **dadurch gekennzeichnet, dass** durch die Steuereinrichtung (13) aufgrund der gemessenen Temperatur zusätzlich die zuführbare Dampfmenge über ein in der Dampfzuführung angebrachtes erstes Ventil (7) einstellbar ist.

6. Vorrichtung nach Anspruch 1, **dadurch gekennzeichnet, dass** der Temperaturfühler (15) derart angebracht ist, dass **dadurch** die Austritttemperatur der Milch bzw. des Milch-Dampfgemisches messbar ist und dass durch die Steuereinrichtung (13) aufgrund der gemessenen Austritttemperatur die Fördermenge der Pumpe (10) für die Milch einstellbar ist.

7. Vorrichtung nach Anspruch 6, **dadurch gekennzeichnet, dass** in der Steuereinrichtung (13) in einem Speicher eine Austritttemperatur-Tabelle abgespeichert ist, in welcher jedem Wert der Austritttemperatur ein Stellwert für die durch die Pumpe (10) zu liefernde Fördermenge zugeordnet ist.

8. Vorrichtung nach Anspruch 7, **dadurch gekennzeichnet, dass** durch die Steuereinrichtung (13) die Pumpe (10) gemäss dem zugeordneten Stellwert einstellbar ist.

9. Vorrichtung nach einem der Ansprüche 6 bis 8, **dadurch gekennzeichnet, dass** durch die Steuereinrichtung (13) aufgrund der gemessenen Austritttemperatur zusätzlich die zuführbare Dampfmenge über ein in der Dampfzuführung angebrachtes erstes Ventil (7) einstellbar ist.
